# FASCICULE DE BREVET EUROPEEN

(11) **EP 2 295 941 B1**
(45) Date de publication et mention de la délivrance du brevet: **14.03.2012**
(21) Numéro de dépôt: 09305824.6
(22) Date de dépôt: 09.09.2009
(51) Int. Cl.: G01F 15/06, G01F 15/00, G01F 15/14, G01F 15/18, G01D 4/00

(54) **Compteur de fluide équipé d'un module de télérelève fixé au moyen d'une bague anti-fraude**
Flüssigkeitszähler, der mit einem mit Hilfe eines Betrugsbekämpfungsrings fixierten Moduls zur Fernerfassung ausgestattet ist
Fluid meter equipped with a remote reading module fixed by means of a tamper-proof collar

(43) Date de publication de la demande: 16.03.2011
(73) Titulaire: Itron France, 92100 Boulogne-Billancourt (FR)
(72) Inventeur: Darras, Arnaud, 69002, Lyon (FR); Goujon, Aurélie, 01570, Manziat (FR)
(74) Mandataire: Lenne, Laurence

(56) Documents cités:
- EP-A1- 0 243 226
- WO-A2-2004/111968
- DE-U1- 29 902 509
- FR-A1- 2 907 545
- US-B1- 6 588 447

## Description

L'invention concerne un compteur de fluide équipé d'un module de télérelevé fixé au moyen d'une bague anti-fraude.

Un tel module de télérelevé est décrit dans le document de brevet EP 1 571 428.

Un tel module est relativement cher et il n'est généralement pas économiquement justifié d'équiper les compteurs de tels modules en cours de fabrication. La solution consiste donc à pré-équiper les compteurs de moyens permettant la fixation, immédiatement en usine ou la plupart du temps ultérieurement, des modules de télérelevé sur les compteurs, selon les besoins. De plus, les modules sont généralement fixés de façon amovible sur les compteurs, ce qui permet, sans avoir à changer les compteurs, de changer les modules pour des raisons imposées par des contraintes administratives ou technologiques.

Il est donc connu de réaliser un module apte à être fixé de façon amovible dans un logement d'un totalisateur du compteur, ce module comportant des moyens de fixation verticale constitué d'une clé mécanique constituée d'un évidement destiné à coopérer avec un ergot solidaire du capot du totalisateur, l'ergot pouvant se clipser dans l'évidement. Le module comporte de plus une zone profilée en nervure destinée à être clipsée sur une rainure agencée sur un bord de la cavité de réception, dans le capot du totalisateur. Un tel module ne peut être enlevé de sa cavité de réception que par translation latérale afin de libérer la clé mécanique et la zone profilée.

En variante, cette fixation peut être réalisée au moyen d'un ou plusieurs doigts élastiques terminés chacun par un crochet qui se clipse dans une gorge pratiquée sur le pourtour du totalisateur. Dans ce cas, montage et démontage du module s'effectue du haut vers le bas ou du bas vers le haut, verticalement.

Afin d'éviter toute fraude par démontage du module de télérelevé, il est nécessaire de sécuriser le module.

WO2004/111968 résout ce problème en utilisant un câble de scellement. Cet document décrit un compteur de fluide équipé d'un totalisateur et d'un module de télé-relevé disposé sur ce dernier dans une zone dite zone supérieure, ledit totalisateur étant pourvu d'un capot en matière plastique, le compteur comportant une bague cylindrique de scellement dudit module disposée autour de ladite zone supérieure et solidarisée audit capot au moyen d'au moins un moyen de clipsage indémontable constitué d'une languette de clipsage agencée sur ladite bague. La solidarisation de la bague de scellement du module au capot du totalisateur est effectuée par clipsage par translation verticale et est indémontable au moyen d'un câble solidarisé à la bâche par l'intermédiaire d'une valve de contrôle. L'utilisation d'un câble de scellement est une pièce supplémentaire qui nécessite stockage et gestion.

L'invention résout ce problème.

Pour ce faire, l'invention propose un compteur de fluide équipé d'un totalisateur et d'un module de télérelevé disposé sur ce dernier dans une zone dite zone supérieure, ledit totalisateur étant pourvu d'un capot en matière plastique, comportant une bague cylindrique de scellement dudit module disposée autour de ladite zone supérieure et solidarisée audit capot.

Selon l'invention, ladite bague est solidarisée audit capot au moyen d'au moins un moyen de clipsage indémontable à partie sécable.

Ledit moyen de clipsage est constitué d'une languette de clipsage agencée sur ladite bague et introduite par rotation de la bague dans une partie de type passant de ceinture agencée dans ledit capot du totalisateur.

Avantageusement, ladite languette est pourvue de deux harpons flexibles de blocage avec des épaulements internes audit passant, l'un desdits harpons étant dirigé vers l'extérieur et l'autre desdits harpons étant dirigé vers l'intérieur de ladite bague.

De préférence, ladite bague est également reliée audit capot au moyen d'au moins un élément de liaison par rotation.

Ledit capot peut comporter un épaulement périphérique horizontal sous ladite zone supérieure.

Contrairement aux modes de réalisation décrits dans ce document antérieur déjà cité EP 1 571 428, le capot du totalisateur peut comporter un épaulement horizontal, sa section au-dessus de cet épaulement étant d'un diamètre inférieur à celui de sa section au-dessous de cet épaulement, où il est raccordé avec une bâche, et la cavité de réception du module de télérelevé étant disposée dans cette section supérieure.

Dans ce cas, l'élément de liaison par rotation est de préférence constitué d'un crochet disposé sur le bord inférieur de ladite bague et disposé dans une fente agencée sur ledit épaulement du capot

Avantageusement, ladite partie de type passant de ceinture est adjacente audit épaulement du capot.

L'invention est décrite ci-après plus en détail à l'aide de figures ne représentant qu'un mode de réalisation préféré de l'invention.
La figure 1 est une vue en perspective de face d'un compteur conforme à l'invention.
La figure 2 est une vue de dessus de ce compteur.
La figure 3 est une vue en perspective d'une bague, partie de ce compteur.
Les figures 4A et 4B sont des vues de détail de ce compteur.

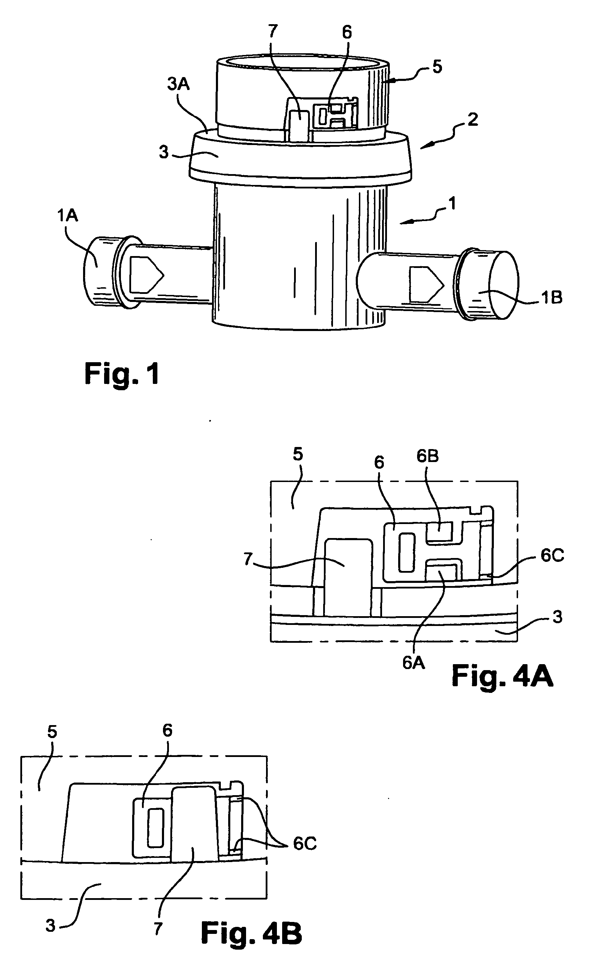

La figure 4 est une autre vue de détail de ce compteur.

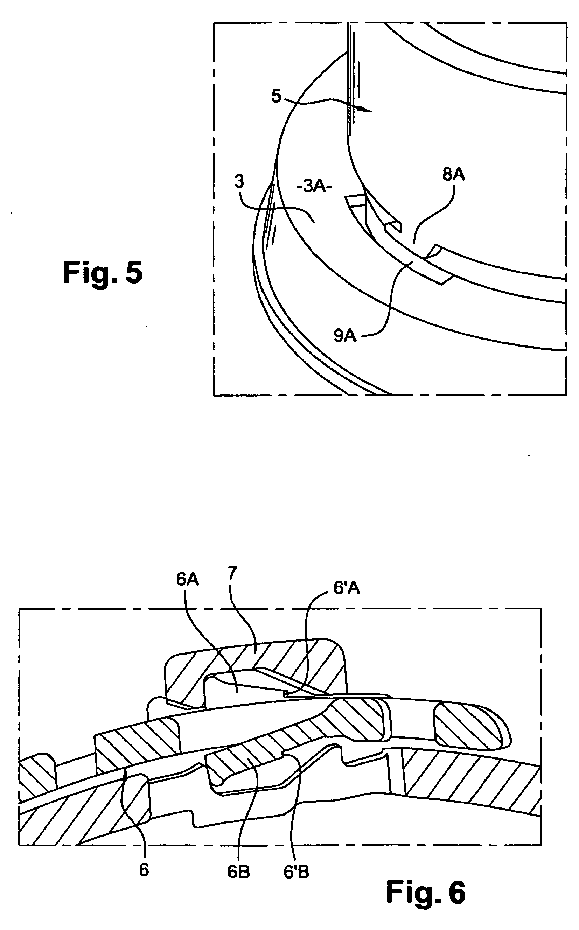

La figure 6 est une vue en coupe de détail de ce compteur.

Dans ce qui précède et ce qui suit, les qualificatifs d'orientation tels que « vertical », « horizontal », « supérieur » ou « inférieur » sont à comprendre en considérant la disposition du compteur sur ces figures.

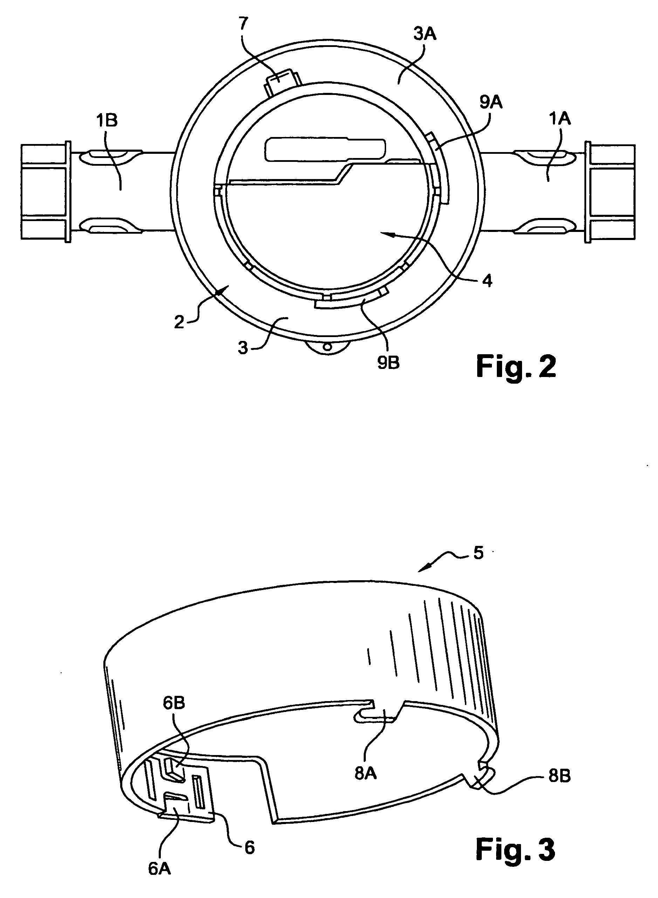

Tel que représenté sur les figures 1 et 2, un compteur comporte une bâche 1 contenant une chambre de mesure et pourvue d'un tronçon de conduite d'entrée 1A du fluide, en particulier de l'eau, et d'un tronçon de conduite de sortie 1B du fluide. Sur cette bâche est monté un totalisateur 2 destiné au comptage du débit et/ou du volume de fluide et pourvu d'un capot 3 en matière plastique.

Un module de télérelevé 4 est disposé sur ce totalisateur dans une zone dite zone supérieure. Ce module est du type de celui décrit dans le document de brevet EP 1 571 428 et est disposé dans une cavité de réception agencé sur la face supérieure du totalisateur 2. Selon le mode de réalisation représenté, le module ne peut être enlevé de sa cavité de réception que par translation latérale afin de libérer une clé mécanique et une zone profilée.

Le capot 3 du totalisateur comporte un épaulement périphérique horizontal 3A sous ladite zone supérieure.

Un tel compteur tel qu'illustré sur le figure 2 est destiné à être équipé d'une bague 5 cylindrique de scellement du module 4 disposée autour de la zone supérieure et solidarisée au capot 3. Une telle bague est représentée seule sur la figure 3 et sur la figure 1 avant sa fixation au capot du totalisateur.

La bague 5 comporte au moins un moyen de clipsage indémontable à partie sécable 6 constitué d'une languette de clipsage agencée sur la bague et introduite par rotation de la bague autour de l'axe vertical central du compteur, dans une partie de type passant 7 de ceinture agencée dans le capot 3 du totalisateur et adjacente à l'épaulement 3A du capot.

La languette 6 est pourvue de deux harpons flexibles de blocage avec des épaulements internes audit passant, comme visible sur la figure 6, l'un desdits harpons 6A étant dirigé vers l'extérieur et l'autre desdits harpons 6B étant dirigé vers l'intérieur de ladite bague.

La bague 5 est également reliée au capot 3 du totalisateur au moyen d'au moins un élément de liaison par rotation, ici deux tels éléments 8A et 8B.

Chaque élément de liaison par rotation 8A et 8B est constitué d'un crochet disposé sur le bord inférieur de la bague 5 et disposé dans une fente 9A et 9B correspondante agencée sur l'épaulement 3A du capot

Le montage de la bague s'effectue donc du haut vers le bas pour venir en position représentée sur les figures 1, 4A et 5. Dans cette position, les crochets 8A et 8B sont en face des fentes 9A et 9B et y sont introduits. La bague est alors en butée contre l'épaulement 3A du capot du totalisateur et elle est tournée de sorte que les crochets 8A et 8B viennent se bloquer en extrémité de chaque fente correspondante 9A et 9B et que la languette 6 vienne se bloquer dans la partie du type passant 7, ses deux harpons 6A et 6B venant se bloquer contre les épaulements correspondants agencés dans le passant.

Selon l'exemple représenté, la bague 5 empêche ainsi le déplacement latéral du module de télérelevé 4 et celui-ci étant auto-bloqué verticalement dans sa cavité de réception agencée dans le capot 3 du totalisateur, le module ne peut être enlevé.

Si le module de télérelevé 4 n'est pas auto-bloqué verticalement dans sa cavité de réception, il suffit d'agencer sur la bague 5 une collerette radiale intérieure sur son bord supérieur, qui vient alors le bloquer verticalement.

Pour le démontage du module, autorisé par un opérateur ou frauduleux par un fraudeur, la présence d'un épaulement 6A' et 6B' sur chaque harpon 6A et 6B de la languette 6 empêche une intervention sur ces harpons au moyen d'un outil tel qu'un tournevis, pour sortir cette languette du passant 7. La personne doit donc tourner avec une certaine force la bague 5 et casse alors une partie sécable 6C de la languette 6 disposée en amont des harpons 6A, 6B

## Revendications

1. Compteur de fluide équipé d'un totalisateur (2) et d'un module de télérelevé (4) disposé sur ce dernier dans une zone dite zone supérieure, ledit totalisateur étant pourvu d'un capot (3) en matière plastique, le compteur comportant une bague cylindrique (5) de scellement dudit module (4) disposée autour de ladite zone supérieure et solidarisée audit capot (3) au moyen d'au moins un moyen de clipsage indémontable (6) constitué d'une languette de clipsage agencée sur ladite bague, compteur **caractérisé en ce que** ladite languette de clipsage est à partie sécable et est introduite par rotation de la bague (5) dans une partie de type passant de ceinture (7) agencée dans ledit capot (3) du totalisateur

2. Compteur selon la revendication 1, **caractérisé en ce que** ladite languette (6) est pourvue de deux harpons flexibles (6A, 6B) de blocage avec des épaulements internes audit passant (7), l'un desdits harpons (6A) étant dirigé vers l'extérieur et l'autre desdits harpons (6B) étant dirigé vers l'intérieur de ladite bague (5).

3. Compteur selon l'une des revendications précédentes, **caractérisé en ce que** ladite bague (5) est également reliée audit capot (3) au moyen d'au moins un élément de liaison par rotation (8A, 8B).

4. Compteur selon l'une des revendications précédentes, **caractérisé en ce que** ledit capot (3) comporte un épaulement périphérique horizontal (3A) sous ladite zone supérieure.

5. Compteur selon la revendication 3 et 4, **caractérisé en ce que** ledit élément de liaison par rotation est constitué d'un crochet (8A, 8B) disposé sur le bord inférieur de ladite bague (5) et disposé dans une fente (9A, 9B) agencée sur ledit épaulement (3A) du capot.

6. Compteur selon la revendication 4 ou 5, **caractérisé en ce que** ladite partie de type passant de ceinture (7) est adjacente audit épaulement (3A) du capot.

## Claims

1. A fluid meter fitted with a counter (2) and a telemetering module (4) placed thereon in a so-called upper area, said counter being provided with a plastic hood (3), the meter comprising a cylindrical ring (5) for sealing said module (4) placed around said upper area and made integral with said hood (3) by means of at least one non-removable snap-on means (6) consisting of a snap-on tab arranged on said ring, the meter being **characterized in that** said snap-on tab has a breakable part and is introduced by rotating the ring (5) in a belt loop-like part (7) arranged in said hood (3) of the counter.

2. The meter according to claim 1, **characterized in that** said tab (6) is provided with two flexible blocking hooks (6A, 6B) with shoulders inside said loop (7), one of said hooks (6A) being directed to the outside and the other of said hooks (6B) being directed to the inside of said ring (5).

3. The meter according to any of the preceding claims, **characterized in that** said ring (5) is also connected to said hood (3) by means of at least one rotational linking member (8A, 8B).

4. The meter according to any of the preceding claims, **characterized in that** the hood (3) has a horizontal peripheral shoulder (3A) under said upper area.

5. The meter according to claim 3 and 4, **characterized in that** said rotational linking member consists of a hook (8A, 8B) placed on the lower edge of said ring (5) and placed inside a slot (9A, 9B) arranged on said shoulder (3A) of the hood.

6. The meter according to claim 4 or 5, **characterized in that** said belt loop-like part (7) is adjacent to said shoulder (3A) of the hood.

## Patentansprüche

1. Fluidzähler, ausgestattet mit einem Zählwerk (2) und einem Fernauslesemodul (4), das darauf in einem so genannten oberen Bereich angeordnet ist, wobei das Zählwerk mit einer Plastikabdeckung (3) versehen ist, wobei der Zähler einen zylindrischen Ring (5) zum Versiegeln des Moduls (4) umfasst, der um den oberen Bereich herum angeordnet und mit der Abdeckung (3) anhand mindestens eines nicht abnehmbaren Einrastmittels (6), das aus einer Einrastlasche besteht, die auf dem Ring eingerichtet ist, fest verbunden ist, wobei der Zähler **dadurch gekennzeichnet ist, dass** die Einrastlasche einen abtrennbaren Teil aufweist und durch Drehen des Rings (5) in einem Teil nach Art einer Gürtelschlaufe (7), der auf der Abdeckung (3) des Zählwerks eingerichtet ist, eingeführt wird.

2. Zähler nach Anspruch 1, **dadurch gekennzeichnet, dass** die Lasche (6) mit zwei flexiblen Blockierungshaken (6A, 6B) mit Schultern innerhalb der Schlaufe (7) versehen ist, wobei einer der Haken (6A) zum Äußeren und der andere der Haken (6B) zum Innern des Ringes (5) gerichtet ist.

3. Zähler nach einem der vorhergehenden Ansprüche, **dadurch gekennzeichnet, dass** der Ring (5) auch anhand mindestens eines Drehverbindungselements (8A, 8B) mit der Abdeckung (3) verbunden ist.

4. Zähler nach einem der vorhergehenden Ansprüche, **dadurch gekennzeichnet, dass** die Abdeckung (3) eine waagerechte umlaufende Schulter (3A) unter dem oberen Bereich aufweist.

5. Zähler nach Anspruch 3 und 4, **dadurch gekennzeichnet, dass** das Drehverbindungselement aus einem Haken (8A, 8B) besteht, der an dem unteren Rand des Ringes (5) angeordnet ist und in einem Schlitz (9A, 9B) angeordnet ist, der auf der Schulter (3A) der Abdeckung eingerichtet ist.

6. Zähler nach Anspruch 4 oder 5, **dadurch gekennzeichnet, dass** der Teil (7) nach Art einer Gürtelschlaufe neben der Schulter (3A) der Abdeckung liegt.
